# EUROPEAN PATENT SPECIFICATION

(11) **EP 1 263 560 B1**
(45) Date of publication and mention of the grant of the patent: **03.05.2006**
(21) Application number: 00966723.9
(22) Date of filing: 15.09.2000
(51) Int. Cl.: B29C 33/42, B29C 45/14, B29C 45/00, B65D 35/12

(54) **IMPROVED CONTAINER AND METHOD AND APPARATUS FOR FORMING THE CONTAINER**
VERBESSERTER BEHÄLTER UND VERFAHREN SOWIE VORRICHTUNG ZUM HERSTELLEN DES BEHÄLTERS
CONTENANT AMELIORE, PROCEDE ET APPAREIL DE FORMATION DUDIT CONTENANT

(30) Priority: 16.03.2000 US 189868 P
(43) Date of publication of application: 11.12.2002
(73) Proprietor: Pechiney Plastic Packaging, Inc., Chicago, Illinois 60631 (US)
(72) Inventor: JACKSON, Douglas, J., Wayne, NJ 07470 (US); KING, Daniel, L., Sussex, NJ 07461 (US)
(74) Representative: Hackett, Sean James
(86) International application number: PCT/US2000/025192
(87) International publication number: WO 2001/070474

(56) References cited:
- CH-A- 245 861
- DE-B- 1 080 297
- DE-B- 2 118 841
- FR-A- 1 305 166
- GB-A- 1 038 897
- US-A- 2 313 031
- US-A- 2 788 544
- US-A- 4 117 950
- US-A- 4 470 521
- US-A- 4 518 554
- US-A- 4 988 472
- US-A- 5 219 373
- US-A- 5 447 674
- US-A- 5 705 112

## Description

### FIELD OF THE INVENTION

This invention relates to containers, for example, collapsible dispensing containers, e.g., tubes, for packaging food, dentifrice, cosmetic, industrial, home use and other products. More particularly, this invention is directed to improved containers, e.g., collapsible dispensing containers, that have plastic upper portions, e.g., heads, that have thinned portions. In the improved containers, the upper portions. e.g., the shoulders of the heads, have sufficient rigidity for the process to resist deformation and are securely bonded to the bodies of the containers.

### BACKGROUND OF THE INVENTION

There has been an on-going effort to reduce the cost of making containers. Efforts have been made to reduce the amount of materials used to make the containers. With respect to dispensing containers having an orifice in a substantially rigid upper portion that is joined to a body portion, e.g., collapsible dispensing containers having and orifice in a substantially rigid head whose shoulder is joined to a squeezable or collapsible body, efforts have been directed to reducing the thickness of the upper portion or head. However, these efforts have met with only limited success. When the thickness of the upper portion, e.g., the portion of the shoulder of the head that is joined to the upper end portion of the body, has been reduced, the bond at the joint between the shoulder and the body has lacked sufficient strength to maintain the integrity and seal of the joint. One problem has been that with a thinned shoulder, there has not been an effective way to provide enough plastic material of the shoulder at a high enough temperature to and at the area of the joint with the upper portion of the body wall, to obtain an effective joint and seal. For example, in injection molding processes that inject heads from or through the rim of the orifice of the head to the portion, usually the lower, portion of the shoulder, the temperature of the thinned plastic material drops as it travels through the mold cavity to the area of the shoulder where the temperature of the plastic is not high enough to form a satisfactory bond to the body wall. Although the injection gate can be towards the shoulder to shorten the travel and achieve the bond, it makes it more difficult to back fill the head without flashing the shoulder joint.

US-A-2,788,544 discloses a container which is moulded from a tubular blank using an apparatus having controlled heating and cooling to ensure that a uniform thickness of container wall is maintained. A male tool is provided with ribs to grip the formed container when it is removed from the mould.

US-A-2,313,031 discloses a moulded container. To assist removal of the container from the mould a male tool is provided, which is pressed against the end of the container to form driving lugs. The male tool holds the container against the lugs while the mould is unscrewed.

An example of the Tuboplast process referred to hereafter is disclosed in DE 1,080,297B.

FR-A-1,305,166 discloses a one-shot process for moulding of a tubular container having ribs extending along the length of the entire container body.

It would be desirable to provide low cost containers, especially of the collapsible dispensing type, that employ less materials to produce and that have sufficient strength and integrity. It would also be desirable to provide improved methods and apparatus for forming such containers.

It is an object of this invention to provide improved low cost containers of the above-described type, and methods and apparatus for forming them, that overcome one or more of the above-described problems and/or meet one or more of the above mentioned desires.

### SUMMARY OF THE INVENTION

According to a first aspect of the present invention, there is provided a method of molding a dispensing tube having a head joined to a tubular body, as defined in claim 1. Embodiments may include molding the head of a material that is moldable at elevated temperatures in a tool set having a mold cavity shaped in the form of a head and formed by female tooling for forming the exterior surface of the head and by a male die member for forming the interior surface of the head such that the head will have an inner surface, an outer surface, a neck with an upper end, and a shoulder having a lower end for being joined to the upper end of the tubular body,
providing a plurality of elongated grooves in the outer surface of the male die member, the grooves extending axially from the portion of the die member that forms the neck to end at the portion of the die member that forms the lower end of the shoulder, the grooves providing channels for flow of the moldable material in molten state from the neck to the lower end of the shoulder,
providing a tubular body having an upper end in the mold tooling such that the upper end is axially aligned with the female die member that forms the shoulder,
providing the moldable material in a molten state into the mold cavity portion that is to form,
flowing the moldable material along the grooves to and about the lower end of the shoulder at the lower end of the mold cavity so as to join the upper end of the tubular body to the lower end of the shoulder, and utilizing said moldable material provided through the grooves for joining the upper end of the tubular body to the shoulder to form the dispensing tube, such that the inner surface of the head has a plurality of elongated ribs that are formed in the grooves, said ribs rigidifying the shoulder of the head. Preferably the grooves are provided to extend axially from the upper end of the die member that forms the upper end of the head to the lower end of the shoulder.

According to a second aspect of the present invention, there is provided an apparatus for molding a head of a moldable material, the head being suitable for being joined to a tubular body to form a dispensing tube, as defined in claim 2.

Embodiments may include a tool set having a mold cavity shaped in the form of a head, the tool set including female tooling for forming the exterior surface of the head and male tooling having an outer surface for forming the interior surface of the head, such that the head will have an inner surface, an outer surface, a neck with an upper end, and a shoulder having a lower end portion for being joined to the upper end of the tubular body, the outer surface of the male tooling having a plurality of elongated grooves therein and that extend axially from the portion of the male tooling that forms the neck to end at the portion of the male tooling that forms the lower end of the shoulder, the grooves providing channels for flow of the moldable material, the channels extending from the portion of the male tooling that forms the neck to the portion of the male tooling that forms the lower end of the shoulder.

According to a third aspect of the present invention, there is provided a molded head suitable for being joined to the upper end of a tubular body to form a dispensing tube, as defined in claim 3.

Embodiments may include;
a neck having an upper end, and
a shoulder, the shoulder having a lower end portion suitable for being joined to the upper end of the tubular body, the neck and shoulder having an interior surface that has a plurality of spaced ribs, the ribs being one piece with the head and extending from the neck, preferably from its upper end to the lower end of the shoulder for rigidifying the head.

The shoulder can have web portions between the spaced ribs, and the thickness of the web portions preferably is from about 0.45 mm (0.018 inch) to about 0.74 mm (0.029 inch), more preferably from about 0.58 mm (0.023 inch) to about 0.61 mm (0.024 inch) and most preferably from about 0.508 mm (0.020 inch) to about 0.61 mm (0.024 inch). The shoulder preferably has an outer surface and the ribs have an inner surface and the thickness of the ribs from said outer surface to said inner surface is about 1.02 mm (0.040 inch), more preferably about 0.89 mm (0.035 inch).

According to a fourth aspect of the present invention, there is provided a tubular dispensing container, which comprises:
a molded head as defined above, and
a tubular body having an upper end that is joined to the lower end of the shoulder. In the preferred tubular dispensing container, the diameter of the tubular body is from about 12.7 mm (½ inch) to about 51 mm (2 inches).

### DETAILED DESRCRIPTION OF THE DRAWINGS

The drawings and description disclose preferred embodiments of the invention. Figures 1-5 of the drawings show preferred dimensions of a preferred head of the invention for a tube of approximately 2.54 cm (1 inch) diameter.
Fig. 1 is a side elevation of a head 10 for a tubular container. The head has a neck 12 with a rim 14, an orifice 16, a throat 17, and a shoulder 18 with a lower portion 20. The rim is the upper portion of the neck that defines the orifice of the neck.

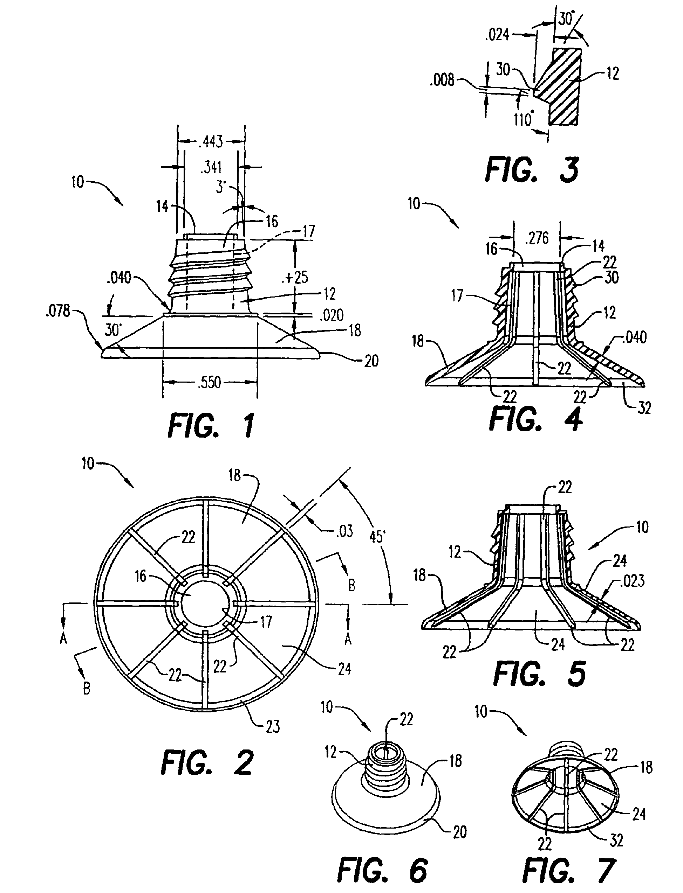

Fig. 2 is a bottom view of the head of Fig. 1. The head has a plurality of circumferentially spaced ribs 22 disposed thereabout. The ribs preferably are on the interior surface of the head, although they can be on the exterior of the head or a combination of both. The ribs preferably extend continuously into neck 12 up to rim 14 thereof. The head has sufficient rigidity without the ribs to be free standing, i.e. self-supporting. Thus, the portions 24 of the shoulder that are between the ribs are of a thickness sufficient to support the head. The perimeter of the interior surface of the shoulder can have a circumferential rib 23 that is preferably continuous and preferably joined to axially extending ribs 22.
Fig. 3 is a vertical section through a thread 30 on neck 12.
Fig. 4, a vertical section taken along line A-A through the opposed ribs 22 of head 10 shown in Fig. 2. Fig. 2 shows ribs 22 extending axially along the inner surface of the head, from rim 14 to the lower end or section 20 of shoulder 18. In this embodiment of the shoulder, it has a short axially depending skirt or lower edge 32. Fig. 4 shows the preferred thickness of 0.102 cm (0.040 inch) of the shoulder, measured from its outer surface to the inner surface of the underlying rib 22.
Fig. 5, a vertical section taken along line B-B of Fig. 2 through the shoulder portions between ribs 22.Fig. 2 shows the thickness of the shoulder portion 18between ribs 22. The shoulder portions between ribs 22that are sometimes referred to as 24, shall sometimes be referred to as webs or interstitial portions. Ribs 22 preferably are integral, i.e., one unitary piece with the rest of shoulder 18.
Fig. 6, an upper perspective view of the head of Fig.1, shows a rib 22 in neck 12 of head 10.
Fig. 7, a lower perspective view of the head of Fig. 1, shows the circumferentially spaced ribs axially extending from rim 14 (not shown) to the lower edge 32 of shoulder 18.
Fig. 8 is a side elevation of a container 40. More particularly, Fig. 8 shows a tubular collapsible dispensing container 40 comprised of a tubular body 42, and a head 10 onto which there is threadedly secured a cap 44. A container for purposes of the invention includes an open ended container 40 as shown, or sealed at its bottom end (not shown) as well as a head attached, joined, bonded or secured to a body and open at one or both ends.
Fig. 9 is a top view of the container of Fig. 8.
Fig. 10, a bottom view of the container of Fig. 8, shows ribs 22 extending axially from the lower portion of shoulder 18 up into neck 12.
Fig. 11 is a vertical section taken along line A-A through the neck and cap of Fig. 9.
Fig. 12 is a perspective view of container 40 of Fig. 8.

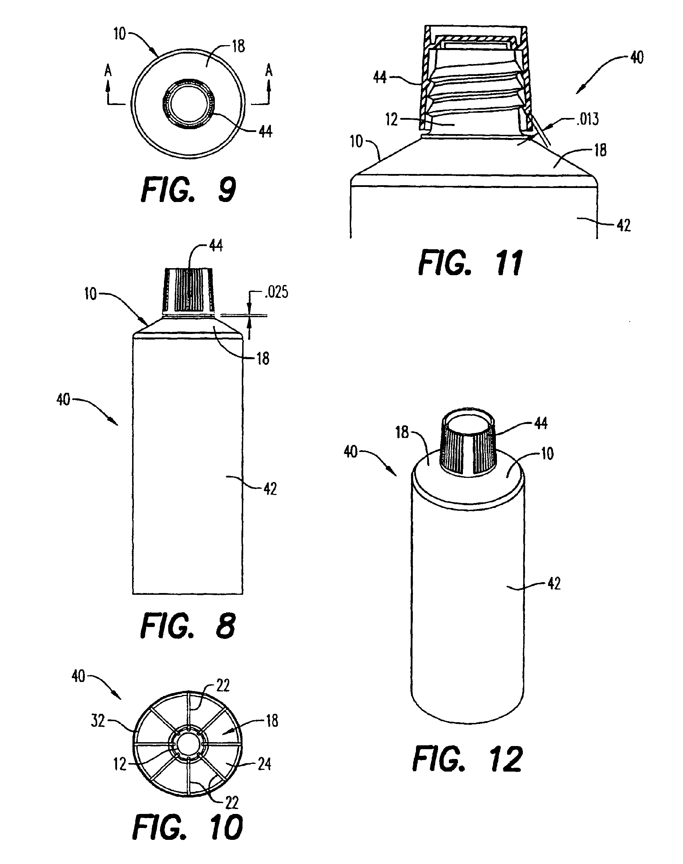

Figs. 8 and 12 show that the shoulder 18 of head 10 is securely joined to body 44 and that a cap 44 can be threadedly secured to neck 12 of head 10.

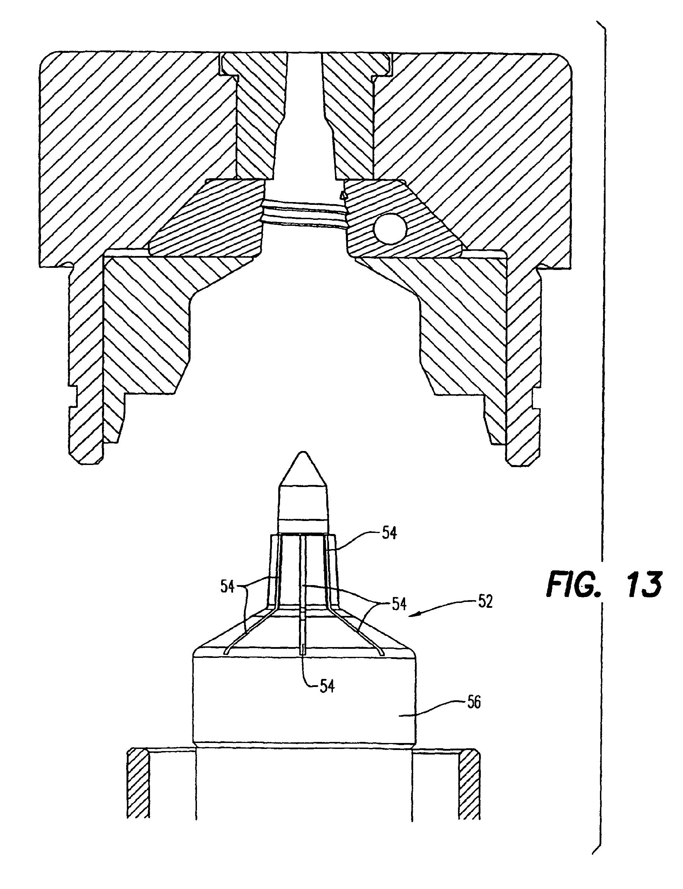

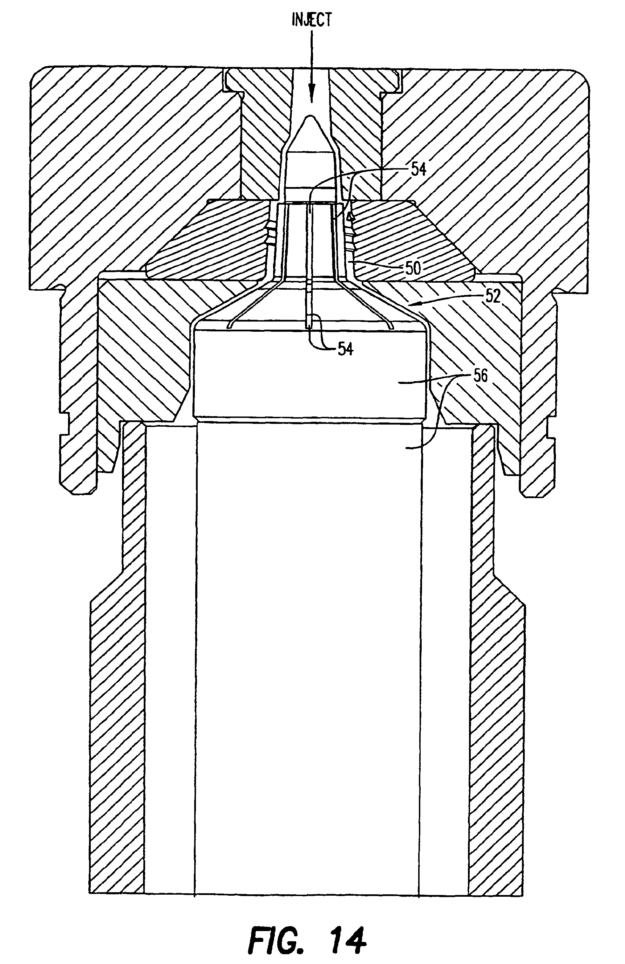

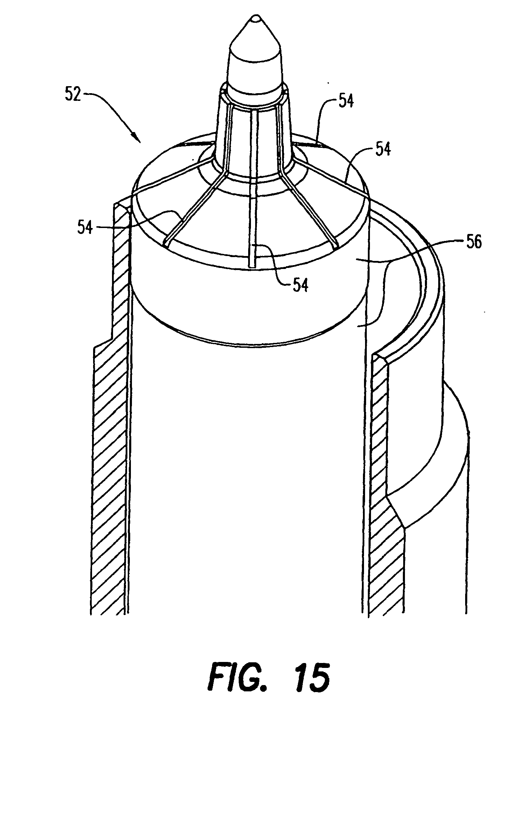

Figs. 13 through 15 show a preferred conventional set of injection molding tools of the Tuboplast process that have been modified for forming the head and container of the invention.

The head of the invention is made with less material than would a head of equal size be made without the invention. An improved low cost head is therefore provided. Containers utilizing the head are low cost containers. The low cost containers with the thinned heads or shoulders of the heads joined to the body walls of the containers have the required rigidity in the neck and shoulder of the head, and they have a sufficiently strong bond at the joint between the shoulder and body. The bond at the joint provides a hermetic seal for commercial applications.

The heads and collapsible dispensing containers of the invention can be made by slight modification and use of any suitable method and apparatus. Referring to Figs 13-15, a preferred method is to inject the plastic material that is to form the head into a mold cavity 50 that is shaped in the form of the head. The molten plastic material is injected from above into the cavity portion that forms the rim of the neck of the head. According to the invention, male tooling, here shown, for example, as the male die member 52 that forms the interior surface of the head, has axial grooves 54 therein that are designed to form the ribs on the interior surface of the head, as the head is being molded. In the preferred process, a tubular body, often referred to as a sleeve (not shown), is positioned on a male mandrel 56 that is axially aligned with the female die member that forms the head. This method and apparatus, without the modification of the invention, is well known in the art. When the head is formed, the molten plastic material flows into and along the grooves to the lower end portion or edge of the shoulder of the head. The grooves provide channels for the flow of the molten material to the lower portion of the shoulder of the head. Enough of the molten material reaches the lower portion of the shoulder at a temperature and pressure that is high enough to form a good bond with the upper end portion or rim of the tubular body. The head and body are left in the mold long enough to bond them together and cool sufficiently that they are securely bonded or joined together. Conventional molding temperatures and materials can be employed. Conventional head forming processes can be employed using apparatus modified in accordance with the invention. This includes pre-molding a head and assembling it to a tubular body in a second operation. The pre-molds can be formed by injection, compression, and thermoforming. Assembly can be effected by induction welding, spin welding and various known processes using heat and pressure. The tubular containers of the invention can be formed by compression molding or thermoforming the head, in each case with simultaneous bonding to the tubular body or sleeve. The heads can also be formed by injection blow molding and perform blow molding. The preferred process and apparatus to be modified according to the invention is well known to those skilled in the art as the Tuboplast process and apparatus. This involves injection of the head and simultaneous bonding of the head to the tubular body or sleeve. This process is disclosed in one or more expired U.S. Patents and will be described more fully herein. Thus, other than modifying the apparatus, mainly for providing and utilizing grooves in the male tooling or male die member, or of course in the female tooling to form ribs on the outer surface of the head, the remaining tooling and the process can be conventional.

As stated above, the head of the invention and container bodies of the invention can be formed by conventional compression molding processes and apparatus. In compression molding, the mold cavity is open and the heated plastic material, usually a metered dose thereof, is deposited into the open mold. The mold is closed under pressure. This moves the plastic around the cavity to form the head and simultaneously join it to the sleeve on the mandrel. The male die member in this process is adapted according to the invention to have grooves to flow material to the joint area and to form the rigidifying ribs.

The plastic material that flows through the grooves preferably leaves the ends of the grooves and flows circumferentially around the mandrel forms the lower end of the shoulder and forms a good bond about the entire periphery of the joint between the head, usually the lower end of the shoulder, and the tubular body.

The use of a reduced amount of plastic material in the head reduces cycle time in producing the heads. The grooves for the ribs and the flow of molten metal through the grooves assures that there is enough plastic material to form a good bond and that the plastic is hot enough that it flows to the joint area and is hot enough and has enough pressure when it reaches the area and to form a good bond, e.g., with the upper portion of the body wall. The invention is not to be limited by the words used above to describe the bond at the joint between the shoulder and the head. Any suitable joint, fusion of materials or connection can be employed. A bond may not require but could have an adhesive.

Traditional injection and compression molded tube heads for a 1 inch diameter tube, measured through the frustoconical portion web of the shoulder of the conventional head, are designed with a typical 1 mm (0.040") thick cross section. For such a sized tube, the preferred cross section according to the invention, measured through the web portion of the shoulder between the ribs, is about 0.51 mm (0.024") thick. The thickness of a cross section through the shoulder and an underlying rib is the same or about the same as the conventional shoulder thickness of 1 mm (0.040"). The preferred thickness of the web area between the ribs is about 0.58 mm (0.023") to about 0.61 mm (0.024"), plus or minus 0.13mm (0.0005"). The interstitial web thickness is sufficient to render the head self-supporting or freestanding. Above 0.762 mm (0.030") there is less need for ribs. If the shoulder of the tube is less than 0.381 mm (0.015") thick, the chances increase that there may not be an adequate bond. The invention is especially advantageous for tubes whose diameters are from about 19 mm (0.75") to about 38 mm (1.5") or about 51 mm (2").

The container bodies of the invention can be made by yet other injection molding processes and apparatus. One such method allows the head and shoulder of the invention to be molded according to the invention as a single entity separately from a body or sleeve. Later, the head is joined to the body or sleeve in a conventional secondary assembly process with suitable materials, temperatures and pressures. The head would be loaded onto a mandrel and heated enough to form a satisfactory bond to the body or sleeve. Any of several of such processes, e.g., induction welding, spin welding, etc. can be employed.

The heads and bodies of the invention can be formed with any suitable materials. Preferably, the head comprised polyethylene, preferably high or low-density polyethylene. The preferred materials for the head have a melt index of from about 1 to 2, although by no means is this range to be considered a limitation. For example, the melt index for the injected perform head could be up to 12 or more.

The drawings show the preferred rib dimensions for the tube described. Those persons of skill in the art will know how to adjust rib widths etc. to suit the application. If the flow path is too thin, it will be difficult for the plastic to have enough heat at the shoulder to provide a good bond.

The ribs can be in any suitable design or configuration. For example, they can branch to distribute material at more points or areas about the circumference of the tube. The ribs can be formed in any suitable pattern.

The heads of the invention provide about a 25% reduction in materials for the tube shown in Figures 1-7 of the drawings. As the size of the tube increases, more savings are provided. The ribs of the invention can be of any suitable thickness, number and arrangement, so long as the grooves to form them allow a sufficient amount of the particular moldable material being employed to flow at the desired temperatures to the desired location, and to preferably provide sufficient rigidity to rigidify the head as needed for the process employed and the handling and uses intended.

## Claims

1. A method of molding a dispensing tube (40) having a head (10) joined to a tubular body (42), which comprises:
molding the head of a material that is moldable at elevated temperatures in a tool set having a mold cavity (50) shaped in the form of a head and formed by female tooling for forming the exterior surface of the head and by a male die member (52) for forming the interior surface of the head such that the head will have an inner surface, an outer surface, a neck (12) with an upper end (14), and a shoulder (18) having a lower end (20) for being joined to the upper end of the tubular body,
providing a plurality of elongated axial grooves (54) in the outer surface of the male die member, the axial grooves extending axially from the upper end of the portion of the die member that forms the neck to end at the portion of the die member that forms the lower end of the shoulder, the axial grooves providing for flow of the moldable material in molten state from upper end of the neck to the lower end of the shoulder,
providing in the mold cavity a circumferential groove connecting the axial grooves at the lower end of the shoulder,
providing a tubular body (42) having an upper end in the mold tooling such that the upper end is axially aligned with the female die member that forms the shoulder,
providing the moldable material in a molten state into the mold cavity that is to form the head,
flowing the moldable material along the axial grooves and the circumferential groove to and about the lower end of the shoulder at the lower end of the mold cavity so as to join the upper end of the tubular body to the lower end of the shoulder, and utilizing said moldable material provided through the axial grooves and the circumferential groove for joining the upper end of the tubular body to the shoulder to form the dispensing tube, such that the inner surface of the head has a plurality of elongated ribs (22) that are formed in the axial grooves, said ribs rigidifying the shoulder of the head.

2. Apparatus for molding a head (10) of a moldable material, the head being suitable for being joined to a tubular body (42) to form a dispensing tube (40), which comprises:
a tool set having a mold cavity (50) shaped in the form of a head, the tool set including female tooling for forming the exterior surface of the head and male tooling (52) having an outer surface for forming the interior surface of the head, such that the head will have an inner surface, an outer surface, a neck (12) with an upper end (14), and a shoulder (18) having a lower end portion (20 for being joined to the upper end of the tubular body (42), the outer surface of the male tooling having a plurality of elongated axial grooves (54) therein and that extend axially from the portion of the male tooling that forms the upper end of the neck to end at the portion of the male tooling that forms the lower end of the shoulder, **characterized in that** the mold cavity defines a circumferential groove connecting the axial grooves at the lower end of the shoulder, that the axial grooves extend from the upper end of the portion of the male tooling that forms the neck to the portion of the male tooling that forms the lower end of the shoulder, and **in that** the axial grooves and the circumferential groove are configured to provide for flow of the moldable material.

3. A molded head (10) suitable for being joined to the upper end of a tubular body (42) to form a dispensing tube (40) comprised of:
a neck (12) having an upper end (14), and
a shoulder (18), the shoulder having a lower end portion (20) suitable for being joined to the upper end of the tubular body, the neck and shoulder having an interior surface that has a plurality of axial spaced ribs (22), the axial ribs being one piece with the head **characterized in that** the axial ribs extend from the upper end of the neck to end at the lower end of the shoulder for rigidifying the head and that the shoulder has a circumferential rib (23) around the perimeter of the lower end portion connecting the axial ribs.

4. The head (10) of claim 3, wherein the shoulder (18) has web portions (24) between the spaced axial ribs (22), and the thickness of the web portions is from 0.45mm (0.018 inch) to 0.74mm (0.029 inch).

5. The head (10) of claim 4, wherein the thickness of the web portions (24) is from 0.58mm (0.023 inch) to 0.61mm (0.024 inch).

6. The head (10) of claim 4, wherein the thickness of the web portions (24) is 0.508mm (0.020 inch) to 0.61mm (0.024 inch).

7. The head (10) of claim 3, wherein the shoulder (18) has an outer surface and the axial ribs (22) have an inner surface and the thickness of the axial ribs from said outer surface to said inner surface is 1.02mm (0.040) inch.

8. The head (10) of claim 3, wherein the thickness of the axial ribs (22) from said outer surface to said inner surface is 0.89mm (0.035 inch).

9. A tubular dispensing container (40), which comprises
a molded head (10) according to claim 4, and a tubular body (42) having an upper end that is joined to the lower end of the shoulder (18).

10. The tubular dispensing container (40) of claim 9, wherein the diameter of the tubular body (42) is from 12.7mm (0.5 inch) to 51mm (2 inches).

## Patentansprüche

1. Verfahren zum Formen eines Spenderrohrs (40) mit einem Kopf (10), der mit einem röhrenförmigen Körper (42) verbunden ist, umfassend:
Formen des Kopfes aus einem Material, das bei höheren Temperaturen formbar ist, in einem Werkzeugsatz mit einem Formhohlraum (50) in der Gestalt eines Kopfes, der gebildet wird von einem Matrizenwerkzeug zum Formen der äußeren Oberfläche des Kopfes und von einem Patrizenelement (52) zum Formen der inneren Oberfläche des Kopfes, so dass der Kopf eine Innenfläche, eine Außenfläche, einen Hals (12) mit einem oberen Ende (14) und eine Schulter (18) mit einem unteren Ende (20) besitzt, das mit dem oberen Ende des röhrenförmigen Körpers verbunden wird,
Bereitstellen einer Mehrzahl länglicher axialer Rillen (54) in der Außenfläche des Patrizenelements, wobei sich die axialen Rillen vom oberen Ende des Abschnitts der Patrize, der den Hals bildet, axial erstrecken und an dem Abschnitt der Patrize enden, der das untere Ende der Schulter bildet, wobei die axialen Rillen den Fluss des formbaren Materials in schmelzflüssigem Zustand vom oberen Ende des Halses zum unteren Ende der Schulter bereitstellen,
Bereitstellen einer umlaufenden Rille im Formhohlraum, die die axialen Rillen am unteren Ende der Schulter verbindet,
Bereitstellen eines röhrenförmigen Körpers (42) mit einem oberen Ende in dem Formwerkzeug, so dass das obere Ende mit dem Matrizenelement, das die Schulter bildet, axial ausgerichtet wird,
Zuführen des formbaren Materials in schmelzflüssigem Zustand in den Formhohlraum, der den Kopf bilden soll,
Fließenlassen des formbaren Materials entlang der axialen Rillen und der umlaufenden Rille an und um das untere Ende der Schulter am unteren Ende des Formhohlraums, so dass das obere Ende des röhrenförmigen Körpers mit dem unteren Ende der Schulter verbunden wird, und Verwenden des formbaren Materials, das durch die axialen Rillen und die umlaufende Rille bereitgestellt wird, zum Verbinden des oberen Endes des röhrenförmigen Körpers mit der Schulter unter Bildung des Spenderrohrs, wobei die Innenfläche des Kopfes eine Mehrzahl länglicher Rippen (22) besitzt, die in den axialen Rillen gebildet werden, wobei die Rippen die Schulter des Kopfes versteifen.

2. Vorrichtung zum Formen eines Kopfes (10) aus einem formbaren Material, wobei der Kopf dazu geeignet ist, mit einem röhrenförmigen Körper (42) unter Bildung eines Spenderrohrs (40) verbunden zu werden, umfassend:
einen Werkzeugsatz mit einem Formhohlraum (50) in der Gestalt eines Kopfes, wobei der Werkzeugsatz ein Matrizenwerkzeug zum Formen der äußeren Oberfläche des Kopfes und ein Patrizenwerkzeug (52) mit einer Außenfläche zum Formen der inneren Oberfläche des Kopfes umfasst, so dass der Kopf eine Innenfläche, eine Außenfläche, einen Hals (12) mit einem oberen Ende (14) und eine Schulter (18) besitzt, die einen unteren Endabschnitt (20) hat, der mit dem oberen Ende des röhrenförmigen Körpers (42) verbunden wird, wobei die Außenfläche des Patrizenwerkzeugs eine Mehrzahl länglicher axialer Rillen (54) darin besitzt, die sich von dem Abschnitt des Patrizenwerkzeugs, der das obere Ende des Halses bildet, axial erstrecken und an dem Abschnitt des Patrizenwerkzeugs enden, der das untere Ende der Schulter bildet, **dadurch gekennzeichnet, dass** der Formhohlraum eine umlaufende Rille festlegt, die die axialen Rillen am unteren Ende der Schulter verbindet, dass die axialen Rillen sich vom oberen Ende des Abschnitts des Patrizenwerkzeugs, der den Hals bildet, zu dem Abschnitt des Patrizenwerkzeugs erstrecken, der das untere Ende der Schulter bildet, und **dadurch**, dass die axialen Rillen und die umlaufende Rille derart gestaltet sind, dass sie einen Fluss des formbaren Materials bereitstellen.

3. Geformter Kopf (10), der dazu geeignet ist, mit dem oberen Ende eines röhrenförmigen Körpers (42) unter Bildung eines Spenderrohrs (40) verbunden zu werden, umfassend:
einen Hals (12) mit einem obere Ende (14) und
eine Schulter (18), wobei die Schulter einen unteren Endabschnitt (20) besitzt, der dazu geeignet ist, mit dem oberen Ende des röhrenförmigen Körpers verbunden zu werden, wobei der Hals und die Schulter eine Innenfläche besitzen, die eine Mehrzahl axialer beabstandeter Rippen (22) aufweist, wobei die axialen Rippen mit dem Kopf einstückig sind, **dadurch gekennzeichnet, dass** die axialen Rippen sich zum Versteifen des Kopfes vom oberen Ende des Halses erstrecken und am unteren Ende der Schulter enden, und dass die Schulter eine umlaufende Rille (23) um den äußeren Umfang des unteren Endabschnitts besitzt, die die axialen Rippen verbindet.

4. Kopf (10) nach Anspruch 3, wobei die Schulter (18) Stegabschnitte (24) zwischen den beabstandeten axialen Rippen (22) besitzt und die Dicke der Stegabschnitte von 0,45 mm (0,018 inch) bis 0,74 mm (0,029 inch) reicht.

5. Kopf (10) nach Anspruch 4, wobei die Dicke der Stegabschnitte (24) von 0,58 mm (0,023 inch) bis 0,61 mm (0,024 inch) reicht.

6. Kopf (10) nach Anspruch 4, wobei die Dicke der Stegabschnitte (24) von 0,508 mm (0,020 inch) bis 0,61 mm (0,024 inch) reicht.

7. Kopf (10) nach Anspruch 3, wobei die Schulter (18) eine Außenfläche hat und die axialen Rippen (22) eine Innenfläche haben und die Dicke der axialen Rippen von der Außenfläche bis zu der Innenfläche 1,02 mm (0,040 inch) beträgt.

8. Kopf (10) nach Anspruch 3, wobei die Dicke der axialen Rippen (22) von der Außenfläche bis zu der Innenfläche 0,89 mm (0,035 inch) beträgt.

9. Röhrenförmiger Spenderbehälter (40), umfassend:
einen geformten Kopf (10) nach Anspruch 4 und einen röhrenförmigen Körper (42) mit einem oberen Ende, das mit dem unteren Ende der Schulter (18) verbunden ist.

10. Röhrenförmiger Spenderbehälter (40) nach Anspruch 9, wobei der Durchmesser des röhrenförmigen Körpers (42) von 12,7 mm (0,5 inch) bis 51 mm (2 inches) reicht.

## Revendications

1. Méthode de moulage d'un tube distributeur (40) ayant une tête (10) reliée à un corps tubulaire (42), qui comprend :
le moulage de la tête d'un matériau qui peut être moulé à des températures élevées dans un outil comprenant une cavité de moulage (50) ayant la forme d'une tête et consistant en une partie femelle pour former la surface extérieure de la tête et un outil mâle (52) pour former la surface intérieure de la tête, de telle sorte que la tête aura une surface intérieure, une surface extérieure, un cou (12) avec une extrémité supérieure (14) et une épaule (18) ayant une extrémité inférieure (20) pour rendre possible la jonction avec l'extrémité supérieure du corps tubulaire,
la fourniture d'une pluralité de rainures axiales ovales (54) dans la surface extérieure dudit outil mâle, les rainures axiales s'étendant sur un plan axial depuis l'extrémité supérieure de la partie de l'outil mâle qui forme le cou jusqu'à la partie de l'outil mâle qui forme l'extrémité inférieure de l'épaule, les rainures axiales permettant la circulation du matériau pouvant être moulé dans un état en fusion depuis l'extrémité supérieure du cou jusqu'à l'extrémité inférieure de l'épaule,
la fourniture dans la cavité de moulage d'une rainure circonférentielle connectant les rainures axiales à l'extrémité inférieure de l'épaule,
la fourniture d'un corps tubulaire (42) ayant une extrémité supérieure dans l'outil de moulage placée de telle sorte que l'extrémité supérieure soit alignée sur un plan axial avec la matrice femelle qui forme l'épaule,
la fourniture du matériau qui peut être moulé dans un état de fusion dans la cavité de moulage afin de former la tête,
la circulation du matériau qui peut être moulé le long des rainures axiales et de la rainure circonférentielle jusqu'à l'extrémité inférieure de l'épaule à l'extrémité inférieure de la cavité de moulage afin de joindre l'extrémité supérieure du corps tubulaire à l'extrémité inférieure de l'épaule, et l'utilisation dudit matériau qui peut être moulé à travers les rainures axiales et la rainure circonférentielle pour joindre l'extrémité supérieure du corps tubulaire à l'épaule afin de former le tube distributeur, de telle sorte que la surface intérieure de la tête ait une pluralité de nervures ovales (22) qui sont formées dans les rainures axiales, lesdites nervures rigidifiant l'épaule de la tête.

2. Appareil servant à mouler une tête (10) d'un matériau qui peut être moulé, la tête étant appropriée pour être attachée à un corps tubulaire (42) afin de former un tube distributeur (40), qui comprend :
un outil comprenant une cavité de moulage (50) ayant la forme d'une tête et consistant en une partie femelle pour former la surface extérieure de la tête et un outil mâle (52) ayant une surface extérieure pour former la surface intérieure de la tête, de telle sorte que la tête aura une surface intérieure, une surface extérieure, un cou (12) avec une extrémité supérieure (14) et une épaule (18) ayant une extrémité inférieure (20) pour rendre possible la jonction avec l'extrémité supérieure du corps tubulaire (42), la surface extérieure de l'outil mâle ayant une pluralité de rainures axiales ovales (54) qui s'étendent sur un plan axial depuis la partie de l'outil mâle qui forme l'extrémité supérieure du cou et se terminent au niveau de la partie de l'outil mâle qui forme l'extrémité inférieure de l'épaule, **caractérisé en ce que** la cavité de moulage définit une rainure circonférentielle connectant les rainures axiales à l'extrémité inférieure de l'épaule, **caractérisé** également **en ce que** les rainures axiales s'étendent depuis l'extrémité supérieure de la partie de l'outil mâle qui forme le cou jusqu'à la partie de l'outil mâle qui forme l'extrémité inférieure de l'épaule, et **en ce que** les rainures axiales et la rainure circonférentielle sont configurées de manière à rendre possible la circulation du matériau qui peut être moulé.

3. Tête moulée (10) appropriée pour être jointe à l'extrémité supérieure d'un corps tubulaire (42) afin de former un tube distributeur (4) composé
d'un cou (12) ayant une extrémité supérieure (14) et
d'une épaule (18) ayant une extrémité inférieure (20) appropriée pour être jointe à l'extrémité supérieure du corps tubulaire, le cou et l'épaule ayant une surface intérieure qui a une pluralité de nervures axiales espacées (22), les nervures axiales étant rattachées à la tête, **caractérisée en ce que** lesdites nervures axiales s'étendent depuis l'extrémité supérieure du cou jusqu'à l'extrémité inférieure de l'épaule pour rigidifier la tête et **en ce que** l'épaule a une nervure circonférentielle (23) autour du périmètre de l'extrémité inférieure connectant les nervures axiales.

4. Tête (10) de la revendication 3, où l'épaule (18) a des âmes (24) placées entre les nervures axiales espacées (22), et dont l'épaisseur des âmes est comprise entre 0,45 mm (0,018 pouce) et 0,74 mm (0,029 pouce).

5. Tête (10) de la revendication 4, où l'épaisseur des âmes (24) est comprise entre 0,58 mm (0,023 pouce) et 0,61 mm (0,024 pouce).

6. Tête (10) de la revendication 4, où l'épaisseur des âmes (24) est comprise entre 0,508 mm (0,020 pouce) et 0,61 mm (0,024 pouce).

7. Tête (10) de la revendication 3, où l'épaule (18) comporte une surface extérieure et les nervures axiales (22) comportent une surface intérieure, et l'épaisseur des nervures axiales entre ladite surface extérieure et ladite surface intérieure est de 1,02 mm (0,040 pouce).

8. Tête (10) de la revendication 3, où l'épaisseur des nervures axiales (22) entre ladite surface extérieure et ladite surface intérieure est de 0,89 mm (0,035 pouce).

9. Conteneur de distribution tubulaire (40), qui comprend
une tête moulée (10) selon la revendication 4 et un corps tubulaire (42) ayant une extrémité supérieure qui est jointe à l'extrémité inférieure de l'épaule (18).

10. Conteneur de distribution tubulaire (40) de la revendication 9, où le diamètre du corps tubulaire (42) est compris entre 12,7 mm (0,5 pouce) et 51 mm (2 pouces).
